# EUROPEAN PATENT APPLICATION

(11) **EP 3 067 778 A1**
(43) Date of publication of application: **14.09.2016**
(21) Application number: 16159686.1
(22) Date of filing: 10.03.2016
(51) Int. Cl.: G06F 1/16, F16M 11/04

(54) **SYSTEM FOR INTEGRATING COMMERCIAL OFF-THE-SHELF DEVICES TO PRODUCE A MODULAR INTERACTION PLATFORM**

(30) Priority: 11.03.2015 US 201562131568 P; 02.03.2016 US 201615058665
(71) Applicant: Atlas5D, Inc., Cambridge, MA 02142 (US)
(72) Inventor: VARSANIK, Jonathan S., Cambridge, MA 02142 (US); PLUMMER, Luke C, Cambridge, MA 02142 (US); KIMMEL, Zebadiah M., Cambridge, MA 02142 (US)
(74) Representative: Kirkham, Nicholas Andrew

(57) **Abstract**

The disclosed technology relates generally to systems for integrating commercial off-the-shelf devices to produce a simple, contained, and reconfigurable sensing, computation, and interaction platform. The systems provide a cost-effective and modular interaction platform. The commercial off-the-shelf devices are arranged such that it is possible to change the components or the orientation of the components used without having to re-design each entire system. The system enables placement of physical safeguards on or near the commercial off-the-shelf devices so as to protect user privacy. The system can include but is not limited to a sensor, computation system, display, and communications and power systems.

## Description

This application claims priority to and the benefit of U.S. Patent Application No. 15/058,665, filed March 2, 2016, entitled "System for Integrating Commercial Off-The-Shelf Devices to Produce a Modular Interaction Platform", which claims priority and benefit of U.S. Provisional Patent Application No. 62/131,568, filed March 11, 2015, entitled "System for Integrating Commercial Off-The-Shelf Devices to Produce a Modular Interaction Platform," the content of each of which is incorporated by reference herein in their entireties.

This application relates to PCT Application No. PCT/US/2012/058534, filed October 3, 2012, entitled "Method and Apparatus for Detecting Deterioration of Health Status," the contents of which is incorporated herein in its entirety.

### Field of the Invention

The disclosed technology relates generally to systems integrating commercial off-the-shelf (COTS) devices to produce a cost-effective and modular interaction platform.

### Background of the Invention

Sensing systems typically include a sensor to gather information about the area around the system, a computation device to process this information, a display to provide interactivity with the user, and communications and power devices to support and enable the operation and interaction of these devices both within the system and with the outside world.

Integrated sensing, processing, display, and communications, sensing systems can be useful in a variety of applications. For example, Kimmel describes using 3D sensors and processing equipment to perform health monitoring in the home in International Application No. PCT/US/2012/058534. In another example, Kimmel describes use of 3D sensors to size a person for apparel, accessories, or prosthetics in International Application No. PCT/US/2012/058443, which is hereby incorporated by reference in its entirety. Moreover, Wernevi describes a method and apparatus for predicting events based on changes in behavior using a sensor system in US Patent Publication No. 2014/0279740.

Existing sensor systems lack the desired configurability, functionality, or simplicity of the system described herein. For example, although existing tablet computers and cellular phones typically integrate functionality; they lack configurability. Tablet computers typically include a 2D sensor, computation device, screen, power, and communications devices. Devices like the Google Tango, made by Google, Inc. of Mountain View, California, integrate a 3D sensor, computer, display, communications, and power systems. However, for these devices, the manufacturer integrates the components at a circuit-board level, and it is not possible to easily select a different component for any of the parts, such as selecting a different camera, screen, or processor, without re-designing the system. Also, if a user wanted to change the orientation of the camera with respect to the screen, this is not possible in these types of devices. These features would be particularly useful in applications that involve monitoring the health status of an individual as described by Kimmel in International Application No. PCT/US/2012/058534.

There is a need for a system with integrated commercial off-the-shelf (COTS) devices that are arranged such that it is possible to change the components or the orientation of the components used without having to re-design the entire system. Other existing solutions typically include only a subset of these functionalities, and due to the lack of configurability described above, it is not simple to add this functionality. Devices like the Wi-Fi video cameras produced by Dropcam, a part of Nest, Inc. of Palo Alto, California, include a 2D camera, communications, and power systems, but no display or computation.

Another drawback of existing solutions is that they do not offer the simplicity provided by COTS devices. While the discrete COTS components may be connected to one another outside of an integrated enclosure, the set-up, operation, and appearance of a system assembled in this manner is unacceptable to consumers. A system with these separate components requires many wires and connections. In order to set-up, install, or move this type of system is cumbersome and time-consuming. Also, the wires needed to connect and power these components can create visual clutter and tripping hazards depending on the placement of the devices. Thus, there is a need for a system that integrates commercial off-the-shelf (COTS) devices to produce a cost-effective and modular interaction platform that is easy and simple to operate by in-house users or who are not agile around tripping hazards.

### Summary of the Invention

The disclosed technology relates generally to systems for integrating commercial off-the-shelf (COTS) devices to produce a cost-effective and modular interaction platform. The COTS devices are arranged such that it is possible to change the components or the orientation of the components used without having to re-design the entire system. For example, systems with integrated COTS devices are systems integrated to produce a simple, contained and reconfigurable sensing, computation, and interaction platform. The system can include but is not limited to a sensor, computation system, display, and communications and power systems.

The system does not require significant electrical or mechanical re-design to change components of the system or orientation of those components. For example, if a system includes a particular 3D sensor (e.g. Microsoft Kinect), the user can select a different 3D sensor and simply take the 3D sensor off and replace it with a different 3D sensor (e.g. SoftKinetic DepthSense). Alternatively, if the 3D sensor points in one direction (e.g. left), the user can simply change the orientation of the 3D sensor (e.g. right).

Further, the disclosed housing for integrating COTS devices includes one or more supports that hold (e.g., position) a computing device, such as a tablet. In certain embodiments, one of the supports covers or filters a camera on the computing device. For example, a support may both hold (e.g., maintain a position of) a tablet in place and either 1) block the tablet's camera entirely; or, 2) filter, or otherwise modify, the tablet's camera, e.g., via a filter, film, screen, gel, fisheye lens, or image-distorting lens. Such blocking or filtering of the tablet's camera may provide comfort to individuals using the disclosed system. For example, the disclosed system may be used to monitor the health of an individual in his/her home. The individual may not want images to be taken of him/her inside the home. While the system may not actually take images of the individual, the camera is covered by the support so the individual need not be concerned with privacy. In this example, the camera mounted to the housing may block visual images from a 2D camera, while permitting depth-of-field information from a 3D camera, ensuring that only depth-of-field information is captured and thereby alleviating privacy concerns.

The disclosed technology, in certain embodiments, includes a housing (e.g., a plastic housing) for a modular interaction platform. The housing, includes a mount for releasably securing a camera to the housing. The camera may be a 2D or 3D camera. In certain embodiments, the camera is a depth-of-field camera.

A removable door (e.g., made of plastic or metal, such as aluminum, titanium, or steel) allows access to the interior of the housing. The interior is sized and shaped to contain a power distribution system located within the housing. In certain embodiments, the wherein the removable door includes an access hole for providing electrical connection from the power distribution system to the camera.

In certain embodiments, the housing includes an opening for accessing an interior of the housing. The interior may be sized and shaped to contain a power distribution system located within the housing. In certain embodiments, a plug receptacle is located in the housing. The plug receptacle is electrically connected to the power distribution system in the interior of the housing to provide power thereto. The power distribution system, in certain embodiments, distributes power to a USB hub, a computing device (e.g., tablet computing device), and/or the camera. In some embodiments, the power distribution system distributes power to other devices as well. In certain embodiment, the plug receptacle is in the removable door.

In certain embodiments, the housing includes a removable door for accessing the interior of the housing. The removable door may include an access hole for providing electrical connection from the power distribution system to the camera. In certain embodiments, the computing device (e.g., tablet) covers at least a portion of the opening (e.g., a majority of the opening or the entire opening) when the tablet is held in place by the one or more computing device supports.

A USB hub support positions a USB hub on an outside surface of the housing. In certain embodiments, one or more vents in the housing to vent the interior of the housing (e.g., 10-50; e.g., 10, 20, 30, or 38).

In certain embodiments, one or more computing device supports for securing a computing device to the housing. The one or more computing device supports include a first support for securing the computing device and for covering a camera of the computing device. In certain embodiments, the one or more computing device supports include a second and third computing device support. In certain embodiments, the first and second supports are positioned to secure/support adjacent sides of the computing device, the first and third supports are positioned to secure adjacent sides of the computing device, and the second and third supports are positioned to secure sides of the computing device opposite one another.

### Brief description of drawings

The foregoing and other objects, aspects, features, and advantages of the present disclosure will become more apparent and better understood by referring to the following description taken in conjunction with the accompanying drawings, in which:
FIG. 1 is an example of a system integrating commercial off-the-shelf (COTS) devices, according to an embodiment of the present disclosure;
FIG. 2 is another example of a system integrating COTS devices, according to an embodiment of the present disclosure;
FIG. 3 is the right front end of a system integrating COTS device, according to an embodiment of the present disclosure;
FIG. 4 is a the left back end of a system integrating COTS device, according to an embodiment of the present disclosure;
FIG. 5 is the right back end of a system integrating COTS device, according to an embodiment of the present disclosure;
FIG. 6 is a top-down view of the right back end of a system integrating COTS device, according to an embodiment of the present disclosure;
FIG. 7 shows the power distribution and USB cables inside the housing, according to an embodiment of the present disclosure; and
FIG. 8 shows a side-angled view of the power distribution and USB cables inside the housing, according to an embodiment of the present disclosure.
FIG. 9 shows a block diagram of an exemplary cloud computing environment; and
FIG. 10 is a block diagram of a computing device and a mobile computing device.

The features and advantages of the present disclosure will become more apparent from the detailed description set forth below when taken in conjunction with the drawings, in which like reference characters identify corresponding elements throughout. In the drawings, like reference numbers generally indicate identical, functionally similar, and/or structurally similar elements.

### Detailed Description of the Invention

The present disclosure describes systems with integrated commercial off-the-shelf (COTS) devices that are arranged such that it is possible to change the components or the orientation of the components used without having to re-design each entire system. For example, systems with integrated COTS devices are systems integrated to produce a simple, contained and reconfigurable sensing, computation, and interaction platform. The system can include but is not limited to a sensor, computation system, display, and communications and power systems.

The system does not require significant electrical or mechanical re-design to change components of the system or orientation of those components. For example, if a system includes a particular 3D sensor (e.g. Microsoft Kinect), the user can select a different 3D sensor and simply take the 3D sensor off and replace it with a different 3D sensor (e.g. SoftKinetic DepthSense). Alternatively, if the 3D sensor points in one direction (e.g. left), the user can simply change the orientation of the 3D sensor (e.g. right).

In contrast, in integrated (non-reconfigurable) OEM systems, changing sensors or orientation of sensors (or other components) would require significant electrical and mechanical redesign and testing.

The devices integrated in this system, in some embodiments, includes a sensor, a computation platform, a display, and power and communications components. A sensor can be either a 2D camera or a 3D sensing device. 2D cameras can be cameras that measure any wavelength of light - visible, ultra-violet, infrared, etc. 3D sensors can be sensors that emit energy and measure information about the returned energy to calculate three-dimensional information about the area in front of the sensor. The energy emitted, in some embodiments, can be infrared light, sound waves, etc. Examples of 3D sensors include the Microsoft Kinect, the Softkinetic DepthSense, the Structure Sensor (made by Occipital of Boulder, CO and San Francisco, CA), and the Argos 3D (made by Bluetechnix of Waidhausenstraße, Austria). In some embodiments, these sensors may be used to monitor the health status of individuals as described in International Application No. PCT/US/2012/058534.

A computing device, in some embodiments, can be either a tablet computer or a dedicated computer. Examples of tablet computers include but are not limited to the Surface (made by Microsoft Corporation of Redmond, WA), the iPad (made by Apple Inc. of Cupertino, CA), and the GalaxyTab 3 (made by Samsung Electronics USA of Ridgefield Park, NJ). Examples of a dedicated computer include Raspberry Pi (made by Raspberry Pi Foundation of Caldecote, Cambridgeshire, UK) and Beaglebone (made by BeagleBoard.org Foundation of Richardson, TX). These devices take the data coming from the sensing device and process it in order to provide analysis of the data, prepare data to show the user, or transmit the data via Wi-Fi or another connection method.

If a tablet computer is integrated into the system, it will typically include a display and communications module. Alternatively, discrete commodity LCD displays or communications modules can be used.

A power module can exist as a multi-outlet extension cord that has been integrated into the unit to allow several components to plug into the device housing, while there is only one wire and plug required to connect to a power outlet.

For communications between the devices, USB cables are typically used and can all be connected to a single USB hub that is integrated within the system.

By using a designed system enclosure to physically connect and integrate the discrete devices (e.g. sensor, computer, display, communications, and power), a configurable and integrated system is achieved. These types of systems provide easy-to-use functionality and workability to the operator.

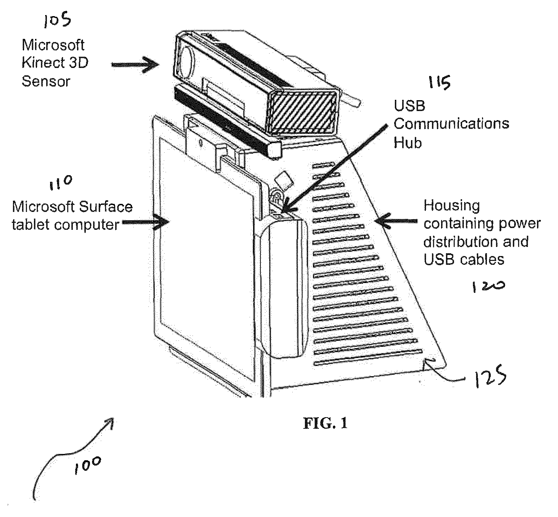

As shown in FIG. 1, an implementation of an example of the system 100 integrating a Microsoft Kinect 3D sensor 105, Microsoft Surface tablet computer 110, with integrated power and a USB hub 115 is shown and described. In brief overview, now referring to FIG. 1, a housing component 125 contains the power distribution and USB cables 120 and provides support (e.g. holds in place) for the commercialized off-the-shelf 3D sensor 105, tablet computer 110. In some embodiments, the housing blocks the camera associated with the tablet (e.g., alleviating privacy concerns). In other embodiments, the housing filters, or otherwise modifies, the tablet's camera, e.g., via a filter, film, screen, gel, fisheye lens, or image-distorting lens. In other embodiments, portions of the housing can have vents to reduce heat generated by the power distribution within the housing.

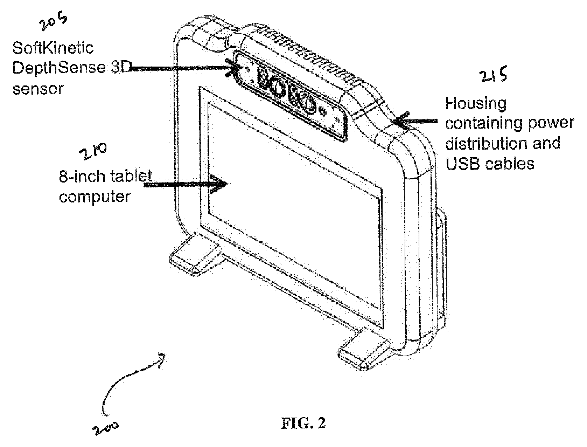

As shown in FIG. 2, an implementation of another example system 200 integrating a Softkinetic DepthSense 3D sensor 205, with an 8-inch tablet computer 210, with integrated power and USB devices 215. In brief overview, now referring to FIG. 2, a housing component contains the power distribution and USB 215 cables and provides support (e.g. holds in place) for the commercialized off-the-shelf 3D sensor, tablet computer, with integrated power and USB devices.

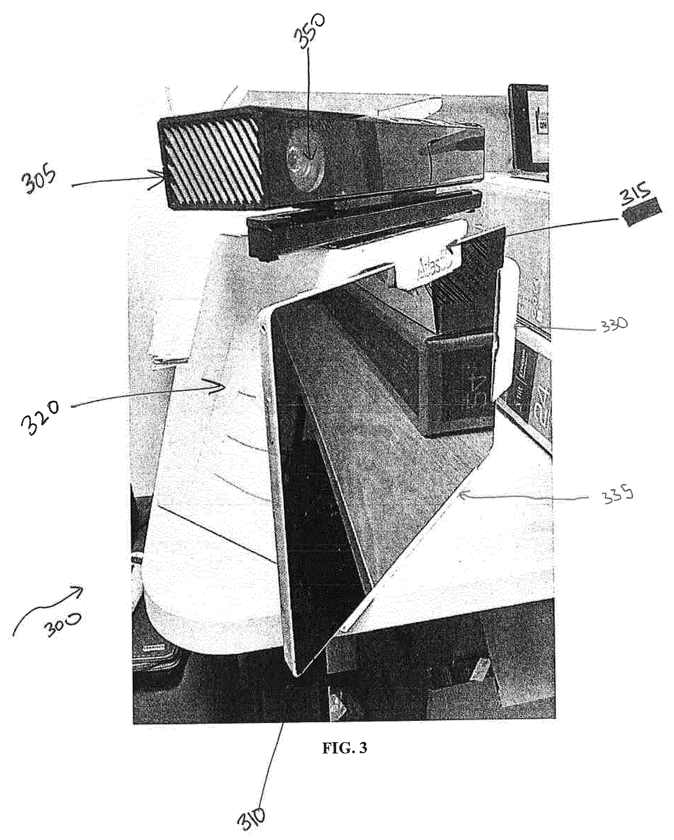

As shown in FIG. 3, an implementation of an example of the system 300 integrating a commercialized off-the-shelf (COTS) 3D sensor 305 with camera 350, COTS tablet computer 310, with integrated power and USB devices is shown and described. Referring to FIG. 3, a housing component 320 contains the power distribution and USB cables and provides support (e.g. holds in place) for the COTS 3D sensor 305, 350, tablet computer 310, with integrated power and USB devices. In some embodiments, the housing includes a member 315 that blocks the camera associated with the tablet (e.g., alleviating privacy concerns). In some implementations, the member 315 holds one side of the tablet 310. In some implementations, a single member 315 holds two or more sides of the tablet 310 in place. In some implementations, as shown in FIG. 3, three retaining members 315, 330, and 335 hold the tablet 310 in place. In some implementations, portions of the housing have vents to reduce heat generated by the power distribution within the housing.

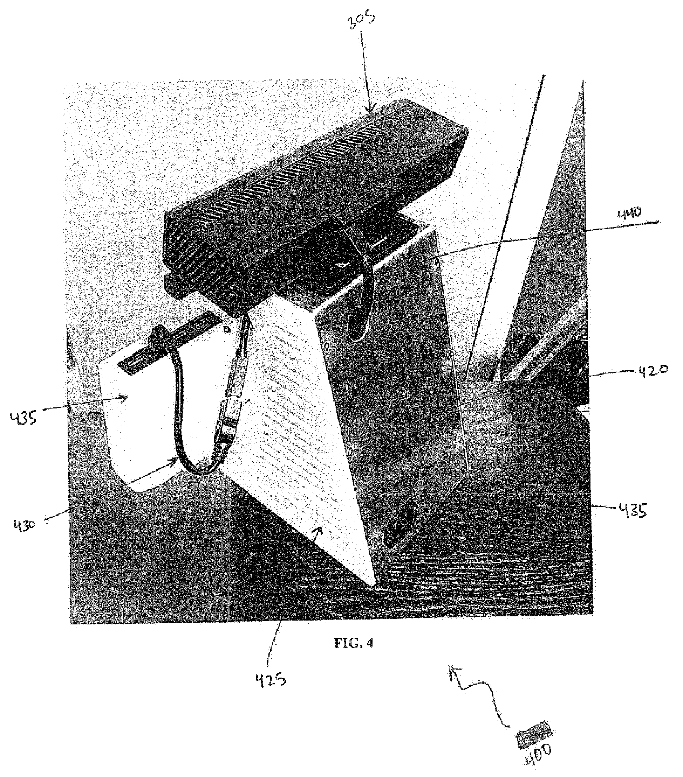

As shown in FIG. 4, the left back view 400 of a system integrating COTS device is shown and described. The power cables of the COTS 3D sensor 305, COTS tablet computer (not shown), with integrated power and USB devices 435, are contained within the housing component 420. The USB communications hub 435 connects to the COTS 3D sensor 305 and/or COTS tablet computer (not shown). Additionally, the COTS 3D sensor cord 440 is neatly inserted into the back of the housing component. Ventilation 425 is provided by the housing unit. The single power module 435 exists as a multi-outlet extension cord and is easily accessible at the back of housing unit 420.

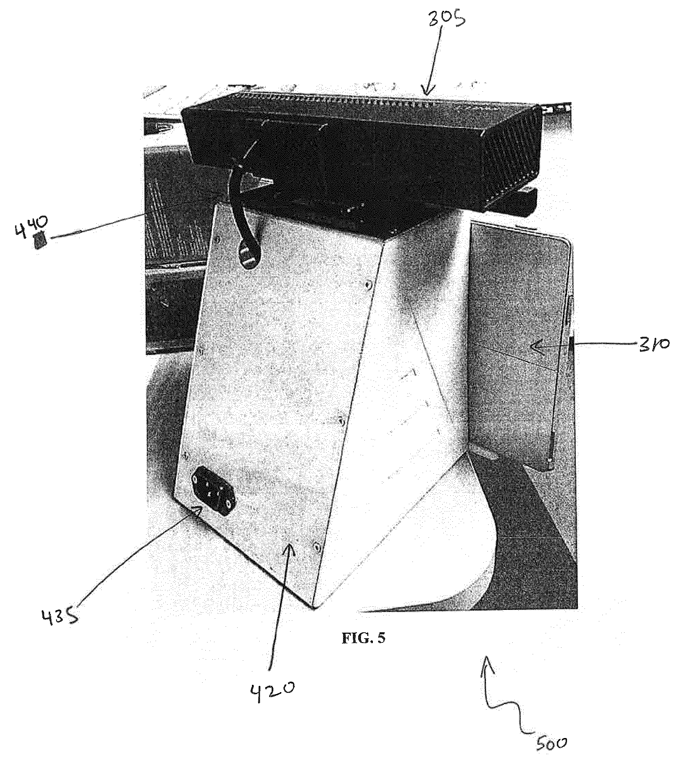

As shown in FIG. 5, the right back view 500 of the system integrating COTS device is shown and described. In brief overview, now referring to FIG. 5, the power cables of the COTS 3D sensor 305, COTS tablet computer 310, with integrated power and USB devices (not shown), are neatly contained within the housing component 420. The back view of the tablet computer 310 is shown to be securely held in place by the housing 420. The 3D sensor cord 440 is shown to be neatly threaded into a hole in the back of the housing unit 420. The single power module 435 exists as a multi-outlet extension cord and is easily accessible at the back of housing unit 420.

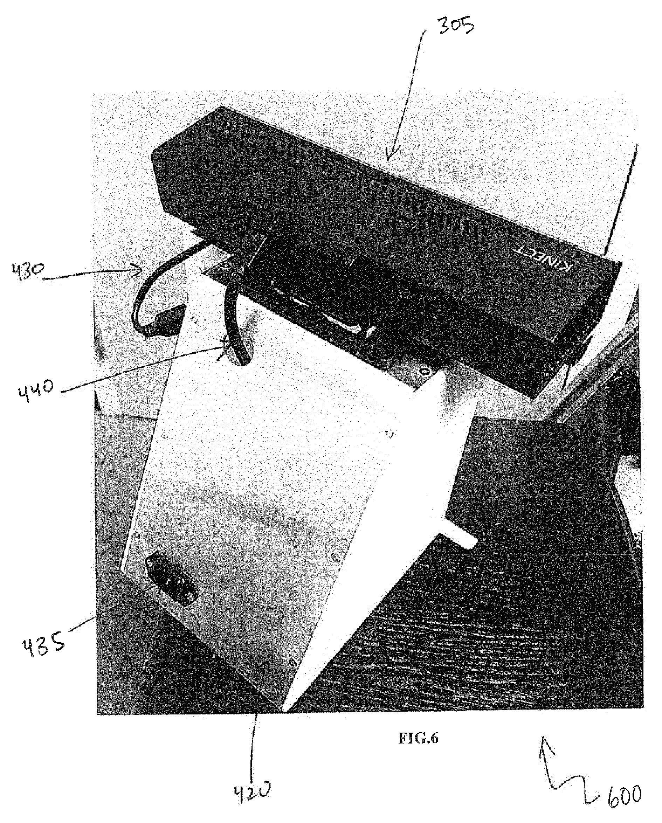

As shown in FIG. 6, the top-down view 600 of the back of the system integrating COTS device is shown and described. In brief overview, now referring to FIG. 6, the power cables of the COTS 3D sensor 305, COTS tablet computer (not shown), with integrated power and USB devices 430, are neatly contained within the housing component 420. The single power module 435 exists as a multi-outlet extension cord and is easily accessible at the back of housing unit 420.

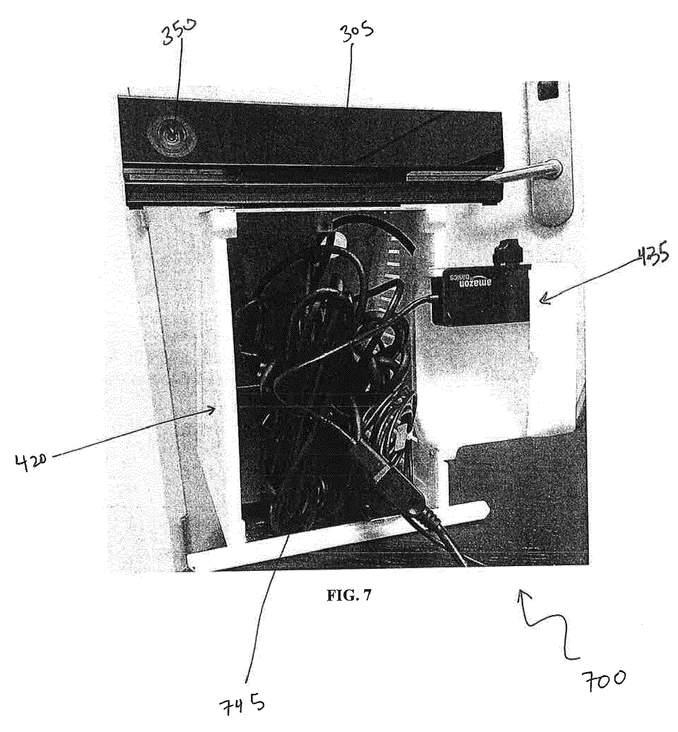

As shown in FIG. 7, the power distribution and USB cables 745 inside the housing 420 are shown and described. The COTS 3D sensor 305 with camera 350 sits on top of the housing 420. The USB communications hub 435 is secured by the housing 420. The housing contains the wires, thereby preventing clutter to be seen by the user.

As shown in FIGS. 3 and 7, in some implementations, the housing 420 has an opening behind where the computing device 310 is placed. This allows access to the interior of the housing 420 and components therein, such as the power distribution system. In this example, when the tablet 310 is placed in its proper location (as shown in FIG. 3), the opening (shown in FIG. 7) in the housing 420 is covered and the components in the interior of the housing 420 are hidden.

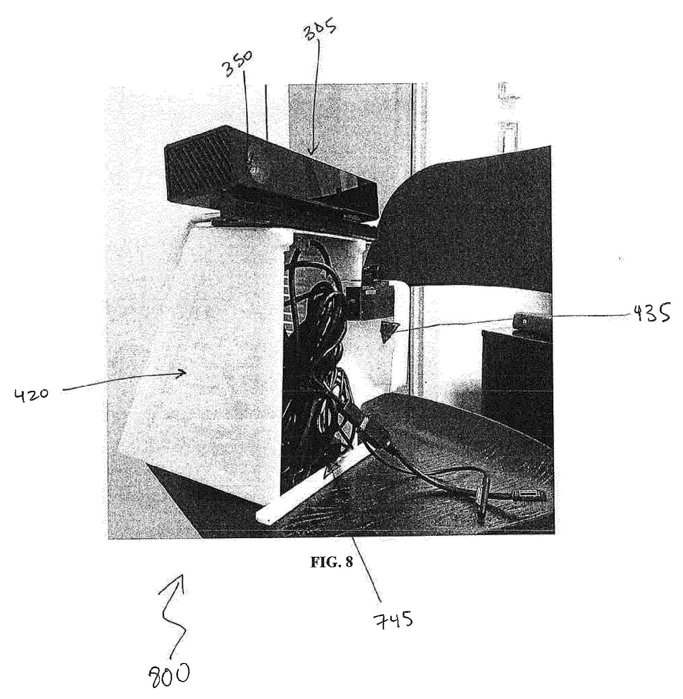

As shown in FIG. 8, an angled view of the power distribution and USB cables 745 inside the housing 420 are shown and described. The COTS 3D sensor 305 with camera 350 sits on top of the housing 420. The USB communications hub 435 is secured by the housing 420. The housing contains the wires, thereby preventing clutter to be seen by the user.

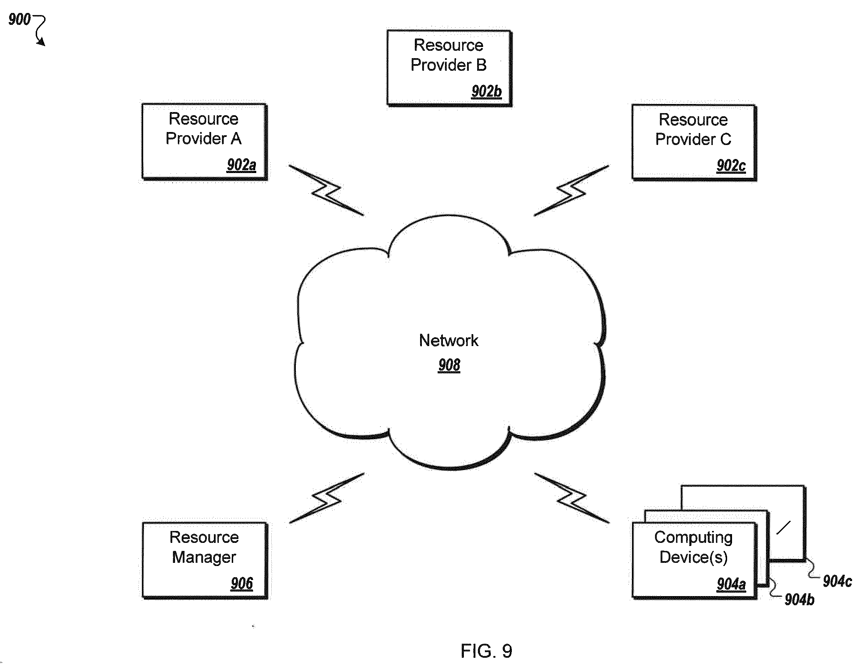

As shown in FIG. 9, an implementation of a network environment 900 for use in integrating commercial off-the-shelf devices to produce a cost-effective and modular interaction platform is shown and described. In brief overview, referring now to FIG. 9, a block diagram of an exemplary cloud computing environment 900 is shown and described. The cloud computing environment 900 may include one or more resource providers 902a, 902b, 902c (collectively, 902). Each resource provider 902 may include computing resources. In some implementations, computing resources may include any hardware and/or software used to process data. For example, computing resources may include hardware and/or software capable of executing algorithms, computer programs, and/or computer applications. In some implementations, exemplary computing resources may include application servers and/or databases with storage and retrieval capabilities. Each resource provider 902 may be connected to any other resource provider 902 in the cloud computing environment 900. In some implementations, the resource providers 902 may be connected over a computer network 908. Each resource provider 902 may be connected to one or more computing device 904a, 904b, 904c (collectively, 904), over the computer network 908.

The cloud computing environment 900 may include a resource manager 906. The resource manager 906 may be connected to the resource providers 902 and the computing devices 904 over the computer network 908. In some implementations, the resource manager 906 may facilitate the provision of computing resources by one or more resource providers 902 to one or more computing devices 904. The resource manager 906 may receive a request for a computing resource from a particular computing device 904. The resource manager 906 may identify one or more resource providers 902 capable of providing the computing resource requested by the computing device 904. The resource manager 906 may select a resource provider 902 to provide the computing resource. The resource manager 906 may facilitate a connection between the resource provider 902 and a particular computing device 904. In some implementations, the resource manager 906 may establish a connection between a particular resource provider 902 and a particular computing device 904. In some implementations, the resource manager 906 may redirect a particular computing device 904 to a particular resource provider 902 with the requested computing resource.

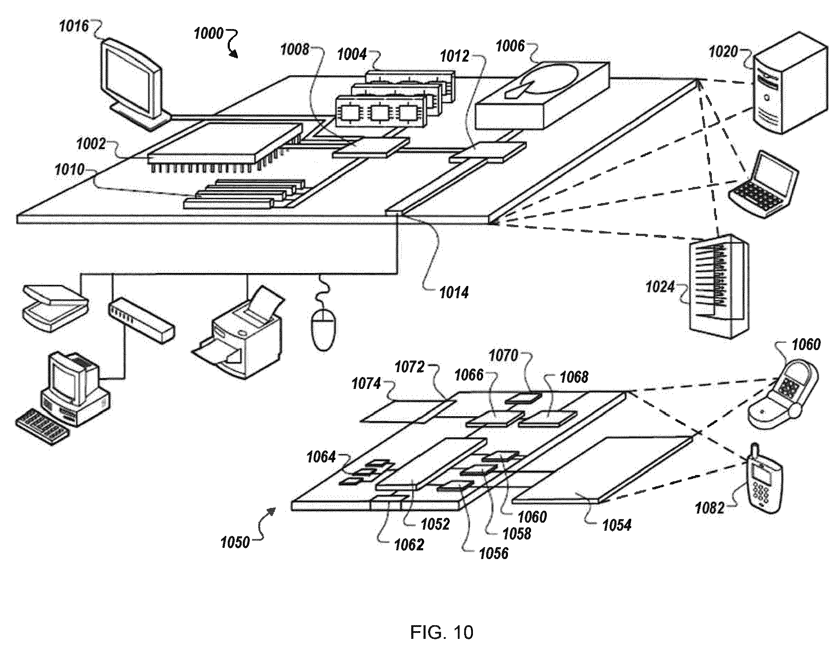

FIG. 10 shows an example of a computing device 1000 and a mobile computing device 1050 that can be used to implement the techniques described in this disclosure. The computing device 1000 is intended to represent various forms of digital computers, such as laptops, desktops, workstations, personal digital assistants, servers, blade servers, mainframes, and other appropriate computers. The mobile computing device 1050 is intended to represent various forms of mobile devices, such as personal digital assistants, cellular telephones, smart-phones, and other similar computing devices. The components shown here, their connections and relationships, and their functions, are meant to be examples only, and are not meant to be limiting.

The computing device 1000 includes a processor 1002, a memory 1004, a storage device 1006, a high-speed interface 1008 connecting to the memory 1004 and multiple high-speed expansion ports 1010, and a low-speed interface 1012 connecting to a low-speed expansion port 1014 and the storage device 1006. Each of the processor 1002, the memory 1004, the storage device 1006, the high-speed interface 1008, the high-speed expansion ports 1010, and the low-speed interface 1012, are interconnected using various busses, and may be mounted on a common motherboard or in other manners as appropriate. The processor 1002 can process instructions for execution within the computing device 1000, including instructions stored in the memory 1004 or on the storage device 1006 to display graphical information for a GUI on an external input/output device, such as a display 1016 coupled to the high-speed interface 1008. In other implementations, multiple processors and/or multiple buses may be used, as appropriate, along with multiple memories and types of memory. Also, multiple computing devices may be connected, with each device providing portions of the necessary operations (e.g., as a server bank, a group of blade servers, or a multi-processor system).

The memory 1004 stores information within the computing device 1000. In some implementations, the memory 1004 is a volatile memory unit or units. In some implementations, the memory 1004 is a non-volatile memory unit or units. The memory 1004 may also be another form of computer-readable medium, such as a magnetic or optical disk.

The storage device 1006 is capable of providing mass storage for the computing device 1000. In some implementations, the storage device 1006 may be or contain a computer-readable medium, such as a floppy disk device, a hard disk device, an optical disk device, or a tape device, a flash memory or other similar solid state memory device, or an array of devices, including devices in a storage area network or other configurations. Instructions can be stored in an information carrier. The instructions, when executed by one or more processing devices (for example, processor 1002), perform one or more methods, such as those described above. The instructions can also be stored by one or more storage devices such as computer- or machine-readable mediums (for example, the memory 1004, the storage device 1006, or memory on the processor 1002).

The high-speed interface 1008 manages bandwidth-intensive operations for the computing device 1000, while the low-speed interface 1012 manages lower bandwidth-intensive operations. Such allocation of functions is an example only. In some implementations, the high-speed interface 1008 is coupled to the memory 1004, the display 1016 (e.g., through a graphics processor or accelerator), and to the high-speed expansion ports 1010, which may accept various expansion cards (not shown). In the implementation, the low-speed interface 1012 is coupled to the storage device 1006 and the low-speed expansion port 1014. The low-speed expansion port 1014, which may include various communication ports (e.g., USB, Bluetooth^{®}, Ethernet, wireless Ethernet) may be coupled to one or more input/output devices, such as a keyboard, a pointing device, a scanner, or a networking device such as a switch or router, e.g., through a network adapter.

The computing device 1000 may be implemented in a number of different forms, as shown in the figure. For example, it may be implemented as a standard server 1020, or multiple times in a group of such servers. In addition, it may be implemented in a personal computer such as a laptop computer 1022. It may also be implemented as part of a rack server system 1024. Alternatively, components from the computing device 1000 may be combined with other components in a mobile device (not shown), such as a mobile computing device 1050. Each of such devices may contain one or more of the computing device 1000 and the mobile computing device 1050, and an entire system may be made up of multiple computing devices communicating with each other.

The mobile computing device 1050 includes a processor 1052, a memory 1064, an input/output device such as a display 1054, a communication interface 1066, and a transceiver 1068, among other components. The mobile computing device 1050 may also be provided with a storage device, such as a micro-drive or other device, to provide additional storage. Each of the processor 1052, the memory 1064, the display 1054, the communication interface 1066, and the transceiver 1068, are interconnected using various buses, and several of the components may be mounted on a common motherboard or in other manners as appropriate.

The processor 1052 can execute instructions within the mobile computing device 1050, including instructions stored in the memory 1064. The processor 1052 may be implemented as a chipset of chips that include separate and multiple analog and digital processors. The processor 1052 may provide, for example, for coordination of the other components of the mobile computing device 1050, such as control of user interfaces, applications run by the mobile computing device 1050, and wireless communication by the mobile computing device 1050.

The processor 1052 may communicate with a user through a control interface 1058 and a display interface 1056 coupled to the display 1054. The display 1054 may be, for example, a TFT (Thin-Film-Transistor Liquid Crystal Display) display or an OLED (Organic Light Emitting Diode) display, or other appropriate display technology. The display interface 1056 may include appropriate circuitry for driving the display 1054 to present graphical and other information to a user. The control interface 1058 may receive commands from a user and convert them for submission to the processor 1052. In addition, an external interface 1062 may provide communication with the processor 1052, so as to enable near area communication of the mobile computing device 1050 with other devices. The external interface 1062 may provide, for example, for wired communication in some implementations, or for wireless communication in other implementations, and multiple interfaces may also be used.

The memory 1064 stores information within the mobile computing device 1050. The memory 1064 can be implemented as one or more of a computer-readable medium or media, a volatile memory unit or units, or a non-volatile memory unit or units. An expansion memory 1074 may also be provided and connected to the mobile computing device 1050 through an expansion interface 1072, which may include, for example, a SIMM (Single In Line Memory Module) card interface. The expansion memory 1074 may provide extra storage space for the mobile computing device 1050, or may also store applications or other information for the mobile computing device 1050. Specifically, the expansion memory 1074 may include instructions to carry out or supplement the processes described above, and may include secure information also. Thus, for example, the expansion memory 1074 may be provide as a security module for the mobile computing device 1050, and may be programmed with instructions that permit secure use of the mobile computing device 1050. In addition, secure applications may be provided via the SIMM cards, along with additional information, such as placing identifying information on the SIMM card in a non-hackable manner.

The memory may include, for example, flash memory and/or NVRAM memory (non-volatile random access memory), as discussed below. In some implementations, instructions are stored in an information carrier. that the instructions, when executed by one or more processing devices (for example, processor 1052), perform one or more methods, such as those described above. The instructions can also be stored by one or more storage devices, such as one or more computer- or machine-readable mediums (for example, the memory 1064, the expansion memory 1074, or memory on the processor 1052). In some implementations, the instructions can be received in a propagated signal, for example, over the transceiver 1068 or the external interface 1062.

The mobile computing device 1050 may communicate wirelessly through the communication interface 1066, which may include digital signal processing circuitry where necessary. The communication interface 1066 may provide for communications under various modes or protocols, such as GSM voice calls (Global System for Mobile communications), SMS (Short Message Service), EMS (Enhanced Messaging Service), or MMS messaging (Multimedia Messaging Service), CDMA (code division multiple access), TDMA (time division multiple access), PDC (Personal Digital Cellular), WCDMA (Wideband Code Division Multiple Access), CDMA2000, or GPRS (General Packet Radio Service), among others. Such communication may occur, for example, through the transceiver 1068 using a radio-frequency. In addition, short-range communication may occur, such as using a Bluetooth^{®}, Wi-Fi™, or other such transceiver (not shown). In addition, a GPS (Global Positioning System) receiver module 1070 may provide additional navigation- and location-related wireless data to the mobile computing device 1050, which may be used as appropriate by applications running on the mobile computing device 1050.

The mobile computing device 1050 may also communicate audibly using an audio codec 1060, which may receive spoken information from a user and convert it to usable digital information. The audio codec 1060 may likewise generate audible sound for a user, such as through a speaker, e.g., in a handset of the mobile computing device 1050. Such sound may include sound from voice telephone calls, may include recorded sound (e.g., voice messages, music files, etc.) and may also include sound generated by applications operating on the mobile computing device 1050.

The mobile computing device 1050 may be implemented in a number of different forms, as shown in the figure. For example, it may be implemented as a cellular telephone 1080. It may also be implemented as part of a smart-phone 1082, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms machine-readable medium and computer-readable medium refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term machine-readable signal refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network (LAN), a wide area network (WAN), and the Internet.

The computing system can include clients and servers. A client and server are generally remote from each other and typically interact through a communication network. The relationship of client and server arises by virtue of computer programs running on the respective computers and having a client-server relationship to each other.

In view of the structure, functions and apparatus of the systems and methods described here, in some implementations, a system and method for integrating commercial off-the-shelf devices to produce a cost-effective and modular interaction platform are provided. Having described certain implementations of methods and apparatus for integrating commercial off-the-shelf devices to produce a cost-effective and modular interaction platform, it will now become apparent to one of skill in the art that other implementations incorporating the concepts of the disclosure may be used. Therefore, the disclosure should not be limited to certain implementations, but rather should be limited only by the spirit and scope of the following claims.

Having described certain implementations of methods and apparatus for supporting transfer printing capacitors, it will now become apparent to one of skill in the art that other implementations incorporating the concepts of the disclosure may be used. Therefore, the disclosure should not be limited to certain implementations, but rather should be limited only by the spirit and scope of the following claims.

Throughout the description, where apparatus and systems are described as having, including, or comprising specific components, or where processes and methods are described as having, including, or comprising specific steps, it is contemplated that, additionally, there are apparatus, and systems of the disclosed technology that consist essentially of, or consist of, the recited components, and that there are processes and methods according to the disclosed technology that consist essentially of, or consist of, the recited processing steps.

It should be understood that the order of steps or order for performing certain action is immaterial so long as the disclosed technology remains operable. Moreover, two or more steps or actions may be conducted simultaneously.

## Claims

1. A housing for a modular interaction platform, the housing comprising:
a mount for releasably securing a camera to the housing;
an opening in the housing for accessing an interior of the housing, wherein the interior is sized and shaped to contain a power distribution system located within the housing;
a plug receptacle in the housing that is electrically connected to the power distribution system to provide power thereto, wherein the power distribution system is for distributing power to a USB hub, a computing device, and/or the camera;
a USB hub support for positioning the USB hub on an outside surface of the housing; one or more vents in the housing to vent the interior of the housing; and
one or more computing device supports for securing a computing device to the housing, wherein the one or more computing device supports comprises a first support for securing the computing device and for at least one of covering and filtering a camera of the computing device.

2. The housing of claim 1, wherein the one or more computing device supports comprises:
a second support for supporting the computing device.

3. The housing of claim 1 or 2, wherein the one or more computing device supports comprises:
a third support for securing the computing device.

4. The housing of claim 3, wherein (i) the first and second supports are positioned to secure/support adjacent sides of the computing device, (ii) the first and third supports are positioned to secure adjacent sides of the computing device, and (iii) the second and third supports are positioned to secure sides of the computing device opposite one another.

5. The housing of any one of the preceding claims, wherein the camera is either a 2D camera, or a 3D camera.

6. The housing of any one of the preceding claims, wherein the camera is a depth-of-field camera.

7. The housing of any one of the preceding claims, wherein the one or more vents comprise a plurality of vents e.g., 10-50; e.g., 10, 20, 30, or 38.

8. The housing of any one of the preceding claims, wherein the computing device is a tablet computing device.

9. The housing of claim 8, wherein the housing removably secures (e.g., via the one or more computing device supports) the computing device while allowing access to a touch screen of the computing device.

10. The housing of any one of the preceding claims, wherein the housing is plastic.

11. The housing of any one of the preceding claims, wherein the removable door is metal e.g., aluminum, titanium, or steel.

12. The housing of any one of the preceding claims, the housing comprising a removable door for accessing the interior of the housing, wherein the interior is sized and shaped to contain a power distribution system located within the housing.

13. The housing of claim 12, wherein the removable door comprises an access hole for providing electrical connection from the power distribution system to the camera.

14. The housing of claim 12 or 13, wherein the plug receptacle is in the removable door.

15. The housing of any one of the preceding claims, wherein opening is sized and shaped such that the computing device (e.g., tablet) covers at least a portion of the opening (e.g., a majority of the opening or the entire opening) when the computing device is held in place by the one or more computing device supports.
